# EUROPÄISCHE PATENTANMELDUNG

(11) **EP 3 034 273 A1**
(43) Veröffentlichungstag der Anmeldung: **22.06.2016**
(21) Anmeldenummer: 15003563.2
(22) Anmeldetag: 15.12.2015
(51) Int. Cl.: B29C 63/00, B29L 31/30, B32B 37/10

(54) **VERFAHREN UND VORRICHTUNG ZUM ANORDNEN EINER FOLIE AUF EINER OBERFLÄCHE**

(30) Priorität: 20.12.2014 DE 102014019326
(71) Anmelder: GM Global Technology Operations LLC, Detroit, MI 48265-3000 (US)
(72) Erfinder: Friese, Stefan, 65423 Ruesselsheim (DE)
(74) Vertreter: Nettinger, Manuela Gertrud

(57) **Zusammenfassung**

Die vorliegende Erfindung betrifft ein Verfahren zum, insbesondere stoffschlüssigen, Anordnen einer Folie (1) auf einer Oberfläche (2), insbesondere eines Kraftfahrzeugs, insbesondere einer Außenfläche einer Karosserie des Kraftfahrzeugs, mit den Schritten:
a) Halten der Folie (1) mittels Unterdruck an einem ersten Haltebereich (A) eines Trägers (3);
b) Anordnen des Trägers (3) über der Oberfläche (2);
c) Anlegen einer elektrostatischen oder pneumatischen Anziehung zwischen der Folie (1) und der Oberfläche (2); und
d) Reduzieren des Unterdrucks und/oder Erhöhen der Anziehung derart, dass die Folie (1) wenigstens teilweise von dem ersten Haltebereich (A) des Trägers (3) auf die Oberfläche (2) übergeht.

## Beschreibung

Die vorliegende Erfindung betrifft ein Verfahren und eine Vorrichtung zum, insbesondere stoffschlüssigen, Anordnen einer Folie auf einer Oberfläche, insbesondere eines Kraftfahrzeugs, insbesondere einer Außenfläche einer Karosserie des Kraftfahrzeugs.

Aus betriebsinterner Praxis ist es bekannt, Lackfolien auf einer Außenfläche einer Karosserie eines Kraftfahrzeugs anzuordnen, um eine Lackierung der Karosserie wenigstens teilweise zu ersetzen oder zu ergänzen. Solche Lackfolien werden bislang manuell auf der Karosserie angeordnet, was die Präzision und/oder die Prozessgeschwindigkeit limitieren kann.

Eine Aufgabe einer Ausführung der vorliegenden Erfindung ist es, das Anordnen einer Folie auf einer Oberfläche, insbesondere eines Kraftfahrzeugs, zu verbessern.

Diese Aufgabe wird durch ein Verfahren mit den Merkmalen des Anspruchs 1 gelöst. Anspruch 10 stellt eine Vorrichtung unter Schutz, die zur Durchführung eines hier beschriebenen Verfahrens eingerichtet ist. Vorteilhafte Ausführungsformen der Erfindung sind Gegenstand der Unteransprüche.

Nach einem Aspekt der vorliegenden Erfindung umfasst ein Verfahren zum Anordnen einer Folie auf einer Oberfläche, insbesondere eines Kraftfahrzeugs, die Schritte:
a) Halten der Folie mittels Unterdruck an einem ersten Haltebereich eines Trägers;
b) Anordnen des Trägers über der Oberfläche;
c) Anlegen einer elektrostatischen und/oder pneumatischen Anziehung zwischen der Folie und der Oberfläche; und
d) Reduzieren des Unterdrucks und/oder Erhöhen der Anziehung derart, dass die Folie wenigstens teilweise von dem ersten Haltebereich des Trägers auf die Oberfläche übergeht.

Entsprechend ist nach einem Aspekt der vorliegenden Erfindung eine Vorrichtung zum Anordnen einer Folie auf einer Oberfläche, insbesondere eines Kraftfahrzeugs, zur Durchführung eines hier beschriebenen Verfahrens eingerichtet und/oder weist
einen Träger;
Mittel zum Halten der Folie mittels Unterdruck an einem ersten Haltebereich des Trägers;
Mittel zum Anordnen des Trägers über der Oberfläche;
Mittel zum Anlegen einer elektrostatischen und/oder pneumatischen Anziehung zwischen der Folie und der Oberfläche; und
Mittel zum Reduzieren des Unterdrucks und/oder Erhöhen der Anziehung derart, dass die Folie wenigstens teilweise von dem ersten Haltebereich des Trägers auf die Oberfläche übergeht, auf.

Hierdurch kann in einer Ausführung die Folie vorteilhaft, insbesondere mit hoher Präzision, insbesondere mit weniger Luftblasen bzw. -einschlüssen, und/oder mit hoher Prozessgeschwindigkeit, insbesondere wenigstens teilweise automatisiert, auf der Oberfläche angeordnet werden.

Der Schritt a) kann in einer Ausführung vor, gleichzeitig mit oder nach Schritt b) und/oder Schritt c) durchgeführt werden. Es kann also insbesondere zunächst die Folie an dem Träger angeordnet, anschließend der Träger mit der an bzw. von ihm gehaltenen Folie über der Oberfläche angeordnet und vorher, dabei oder anschließend die Anziehung angelegt werden. In einer anderen Ausführung kann die Folie auch an dem bereits über der Oberfläche angeordneten Träger angeordnet und dort von ihm gehalten und vorab, dabei oder anschließend die Anziehung angelegt werden.

Die Folie ist in einer Ausführung eine Lackfolie bzw. Folie, die eine Oberflächenlackierung wenigstens teilweise ersetzt oder ergänzt. Entsprechend ist die Folie in einer Ausführung eine Folie, die zum permanenten Verbleib an der Oberfläche vorgesehen ist und/oder eine Außenfläche, insbesondere eines Kraftfahrzeugs, bildet. In einer Ausführung ist die Folie eine klebende, insbesondere selbstklebende, Folie bzw. weist auf ihrer der Oberfläche zugewandten Unterseite einen Klebstoff auf, der in einer Weiterbildung, beispielsweise durch Infrarotstrahlung, aktiviert wird. Zusätzlich oder alternativ kann vor dem Anordnen der Folie auf der Oberfläche bzw. dem Übergang der Folie von dem Träger auf die Oberfläche ein Klebstoff auf der Oberfläche angeordnet werden bzw. sein. Entsprechend wird die Folie in einer Ausführung stoffschlüssig auf der Oberfläche befestigt, insbesondere mit dieser verklebt, wenn oder nachdem sie auf dieser angeordnet bzw. auf diese übergegangen ist.

Die Oberfläche ist in einer Ausführung eine Oberfläche eines Kraftfahrzeugs, insbesondere eine Außenfläche einer Karosserie des Kraftfahrzeugs, insbesondere eine Dachoberseite eines Karosseriedachs, eine Motorhauben- oder Kofferraumoberseite einer Karosseriemotorhaube bzw. eines Karosseriekofferraumdeckels, oder eine seitliche Außenfläche der Karosserie. Das Kraftfahrzeug ist in einer Ausführung ein Personenkraftwagen.

In einer Ausführung beträgt der Unterdruck, insbesondere eine Druckdifferenz zu einem Umgebungsluftdruck, in Schritt a) bzw. zum Halten der Folie wenigstens 0,1 bar, insbesondere wenigstens 0,25 bar, insbesondere wenigstens 0,5 bar, und/oder höchstens 50%, insbesondere höchstens 25%, insbesondere höchstens 10% des Umgebungsluftdrucks und/oder wenigstens 10%, insbesondere wenigstens 25%, insbesondere wenigstens 50% des Umgebungsluftdrucks. Zusätzlich oder alternativ beträgt in Schritt a) bzw. zum Halten der Folie das Produkt des Unterdrucks multipliziert mit der Fläche der Folie wenigstens das 1,5fache, insbesondere wenigstens das Doppelte der Gewichtskraft der Folie.

Unter einer elektrostatischen Anziehung wird vorliegend insbesondere eine anziehende Coulomb-Kraft zwischen der Folie und der Oberfläche verstanden, die unterschiedlich elektrisch geladen sind bzw. unterschiedliche elektrische Potentiale aufweisen, insbesondere analog zu einem Unterdruck die Coulomb-Kraft dividiert durch bzw. bezogen auf eine Haltefläche des Trägers.

Unter einer pneumatischen Anziehung wird vorliegend insbesondere ein Unterdruck zwischen der Folie und der Oberfläche verstanden, insbesondere eine Druckdifferenz zu einem Umgebungsluftdruck. Entsprechend ist in einer Ausführung eine pneumatische Anziehung eine unterdruckbasierte Anziehung zwischen der Folie und der Oberfläche. In einer Weiterbildung ist bzw. wird hierzu ein Raum zwischen Folie bzw. Träger und der Oberfläche, insbesondere durch eine Manschette, gegen den Umgebungsluftdruck abgedichtet. Zur Unterscheidung kann der Unterdruck zum Halten der Folie an dem Träger auch als trägergerichteter Unterdruck bezeichnet werden, der Unterdruck der pneumatischen Anziehung bzw. zum Anziehen der Folie an die Oberfläche als oberflächengerichteter Unterdruck,In einer Ausführung beträgt die Anziehung in Schritt c) höchstens 90%, insbesondere höchstens 75%, und/oder wenigstens 10%, insbesondere wenigstens 25% des (trägergerichteten) Unterdrucks in Schritt a). Allgemein übersteigt in einer Ausführung der (trägergerichtete) Unterdruck bzw. die von ihm auf die Folie ausgeübte Haltekraft in einem Haltebereich des Trägers vor dem Reduzieren des (trägergerichteten) Unterdrucks und/oder dem Erhöhen der Anziehung derart, dass die Folie wenigstens teilweise von diesem Haltebereich des Trägers auf die Oberfläche übergeht, die Anziehung bzw. die von der Oberfläche auf die Folie ausgeübte Anziehungskraft in diesem Haltebereich des Trägers.

Der (trägergerichtete) Unterdruck wird in einer Ausführung durch Trennen einer oder mehrerer Düsen des Trägers, die mit seinem Haltebereich kommunizieren, von einer oder mehreren Unterdruckquellen und/oder Verbinden dieser Düse(n) mit Umgebungsdruck reduziert. Entsprechend weist ein Mittel zum Halten der Folie mittels Unterdruck an einem Haltebereich des Trägers eine oder mehrere Düsen auf, die mit diesem Haltebereich kommunizieren und mit einer oder mehreren Unterdruckquellen verbindbar sind, ein Mittel zum Reduzieren des Unterdrucks ein oder mehrere Stellventile zum wahlweisen Verbinden und/oder Trennen dieser Düse(n) mit bzw. von Unterdruckquelle(n) und/oder Umgebungsdruck. Ein Stellventil kann in einer Ausführung zwei oder mehr diskrete Stellungen aufweisen oder kontinuierlich verstellbar sein.

Die pneumatische Anziehung bzw. der oberflächengerichtete Unterdruck wird in einer Ausführung durch Verbinden einer oder mehrerer Düsen, die mit einem, insbesondere abgedichteten, Raum zwischen Folie bzw. Träger und Oberfläche kommunizieren, mit einer oder mehreren Unterdruckquellen angelegt bzw. erhöht. Entsprechend weist ein Mittel zum Anlegen einer pneumatischen Anziehung eine oder mehrere Düsen auf, die mit einem, insbesondere abgedichteten, Raum zwischen Folie bzw. Träger und der Oberfläche kommunizieren und mit einer oder mehreren Unterdruckquellen verbindbar sind, ein Mittel zum Erhöhen der Anziehung ein oder mehrere Stellventile zum wahlweisen Verbinden und/oder Trennen dieser Düse(n) mit bzw. von Unterdruckquelle(n) und/oder Umgebungsdruck und/oder eine oder mehrere steuer-, insbesondere regelbare, Pumpen, insbesondere Vakuumpumpen, die mit diesen Düsen kommunizieren.

Der Träger mit daran gehaltener Folie kann manuell, insbesondere gestellgeführt, oder maschinell, insbesondere durch einen Roboter, über der Oberfläche angeordnet werden bzw. sein. Entsprechend weist ein Mittel zum Anordnen des Trägers über der Oberfläche in einer Ausführung ein Gestell, an dem der Träger befestigbar und/oder beweglich geführt ist, und/oder einen Roboter auf, der den Träger führt.

Die elektrostatische Anziehung wird in Schritt c) in einer Ausführung dadurch angelegt, dass Folie und Oberfläche mit unterschiedlichen elektrischen Potentialen verbunden werden. Insbesondere kann in einer Weiterbildung die Oberfläche auf einem Nullpotential liegen. Entsprechend weist ein Mittel zum Anlegen einer elektrostatischen Anziehung zwischen der Folie und der Oberfläche in Schritt c) eine Spannungs- bzw. Ladungsquelle auf, die mit der Folie und/oder der Oberfläche elektrisch verbindbar, insbesondere verbunden, ist bzw. wird. Ein Mittel zum Erhöhen der elektrostatischen Anziehung weist entsprechend in einer Ausführung eine Spannungssteuerung, insbesondere -regelung, zum Erhöhen einer elektrischen Spannung zwischen der Folie und der Oberfläche auf.

In einer Ausführung wird in Schritt c), insbesondere einmalig, eine elektrostatische Anziehung angelegt, insbesondere durch Überstreichen mit einer Bürste, Überfahren mit einem Ionisierungsstab in geringem Abstand oder dergleichen, und das Übergehen der Folie von dem Träger auf die Oberfläche nur durch eine Reduzierung des diese haltenden (trägergerichteten) Unterdrucks gesteuert, insbesondere geregelt. Hierdurch kann in einer Ausführung vorteilhaft das Anlegen der elektrostatischen Anziehung vereinfacht werden. Zusätzlich oder alternativ wird in einer Ausführung in Schritt c), insbesondere einmalig, eine pneumatische Anziehung angelegt, insbesondere durch wenigstens teilweises Vakumieren eines, insbesondere abgedichteten, Raums zwischen der Folie bzw. dem Träger und der Oberfläche, und das Übergehen der Folie von dem Träger auf die Oberfläche nur durch eine Reduzierung des diese haltenden (trägergerichteten) Unterdrucks gesteuert, insbesondere geregelt. Hierdurch kann in einer Ausführung vorteilhaft das Anlegen der pneumatischen Anziehung vereinfacht werden. In einer anderen Ausführung wird in Schritt b), insbesondere einmalig, ein (trägergerichteter) Unterdruck angelegt und das Übergehen der Folie von dem Träger auf die Oberfläche nur durch eine Erhöhung der elektrostatischen und/oder pneumatischen Anziehung gesteuert, insbesondere geregelt. Hierdurch kann in einer Ausführung vorteilhaft das Anlegen des (trägergerichteten) Unterdrucks vereinfacht werden. In einer anderen Ausführung wird das Übergehen der Folie von dem Träger auf die Oberfläche sowohl durch eine Reduzierung des diese haltenden Unterdrucks als auch eine, insbesondere gegenläufig synchrone, Erhöhung der Anziehung gesteuert, insbesondere geregelt. Hierdurch kann in einer Ausführung vorteilhaft das Übergehen der Folie von dem Träger auf die Oberfläche verbessert werden.

In einer Ausführung sind der Träger und die an ihm gehaltene Folie beim Übergehen der Folie von dem Träger auf die Oberfläche von der Oberfläche beabstandet. Entsprechend entfernt sich in einer Ausführung die Folie ganz oder teilweise von dem Haltebereich des Trägers und kommt ganz oder teilweise, insbesondere stoffschlüssig, insbesondere klebend, mit der Oberfläche in Kontakt, wenn sie von dem Haltebereich des Trägers auf die Oberfläche übergeht. Gleichermaßen kann die Folie die Oberfläche auch bereits wenigstens teilweise berühren bzw. kontaktieren, wenn sie von dem Träger auf die Oberfläche übergeht. Dann umfasst ein Übergehen der Folie von einem Teilbereich des Trägers auf die Oberfläche ein vollständiges oder teilweises Lösen der Halterung durch den Träger und ein vollständiges oder teilweises Befestigen der Folie auf der Oberfläche, insbesondere stoffschlüssig, insbesondere durch Kleben. In beiden Fällen wird die Folie wenigstens teilweise, insbesondere stoffschlüssig, an der Oberfläche befestigt, insbesondere durch Kleben, wenn sie auf die Oberfläche übergeht oder nachdem sie auf die Oberfläche übergegangen ist.

Nach einem Aspekt wird die Folie in Schritt a) zusätzlich mittels Unterdruck an einem oder mehreren weiteren Haltebereichen des Trägers gehalten und in einem oder mehreren Schritten e), welche Schritt d) und gegebenenfalls einander zeitlich nachgelagert sind, der Unterdruck derart reduziert und/oder die elektrostatische und/oder pneumatische Anziehung derart erhöht, dass die Folie wenigstens teilweise, insbesondere sequentiell, von dem bzw. den weiteren Haltebereichen des Trägers auf die Oberfläche übergeht. Es kann also insbesondere die Folie in Schritt a) mittels (trägergerichtetem) Unterdruck an dem ersten Haltebereich des Trägers und zusätzlich an einem ersten weiteren Haltebereich des Trägers und in einer Weiterbildung an einem zweiten weiteren Haltebereich des Trägers gehalten und zunächst in Schritte d) der (trägergerichtete) Unterdruck derart reduziert und/oder die elektrostatische und/oder pneumatische Anziehung derart erhöht werden, dass die Folie wenigstens teilweise von dem ersten Haltebereichen des Trägers auf die Oberfläche übergeht, anschließend in einem ersten weiteren Schritt e), welcher Schritt d) zeitlich nachgelagert ist, der (trägergerichtete) Unterdruck derart reduziert und/oder die elektrostatische und/oder pneumatische Anziehung derart erhöht werden, dass die Folie wenigstens teilweise von dem ersten weiteren Haltebereich des Trägers auf die Oberfläche übergeht, und in der Weiterbildung in einem zweiten Schritt e), welcher dem ersten Schritt e) nachgelagert ist, der (trägergerichtete) Unterdruck derart reduziert und/oder die elektrostatische und/oder pneumatische Anziehung derart erhöht werden, dass die Folie wenigstens teilweise von dem zweiten weiteren Haltebereich des Trägers auf die Oberfläche übergeht.

Entsprechend weist nach einem Aspekt die Vorrichtung Mittel zum Halten der Folie mittels Unterdruck an einem oder mehreren weiteren Haltebereichen des Trägers und Mittel zum Reduzieren des Unterdrucks und/oder Erhöhen der elektrostatischen und/oder pneumatischen Anziehung derart, dass die Folie wenigstens teilweise von dem weiteren Haltebereich des Trägers auf die Oberfläche übergeht, auf.

Hierdurch kann das Übergehen der Folie von dem Träger auf die Oberfläche sequentiell bzw. sukzessive bereichsweise durchgeführt werden.

In einer Ausführung weisen ein Mittel zum Halten der Folie mittels Unterdruck an einem ersten Haltebereich und ein Mittel zum Halten der Folie mittels Unterdruck an einem oder mehreren weiteren Haltebereichen des Trägers jeweils eine oder mehrere Düsen auf, die mit dem entsprechenden Haltebereich des Trägers kommunizieren und jeweils mit einer oder mehreren Unterdruckquellen bzw. -reservoirs verbindbar sind.

Mittel zum Reduzieren des (trägergerichteten) Unterdrucks derart, dass die Folie wenigstens teilweise von dem ersten Haltebereich des Trägers auf die Oberfläche übergeht, und Mittel zum Reduzieren des (trägergerichteten) Unterdrucks derart, dass die Folie wenigstens teilweise von dem einen oder den mehreren weiteren Haltebereichen des Trägers auf die Oberfläche übergeht, weisen dann in einer Ausführung jeweils ein oder mehrere Stellventile zum wahlweisen Verbinden und/oder Trennen dieser Düse(n) mit bzw. von Unterdruckquelle(n) und/oder Umgebungsdruck und/oder eine Steuerung zum, insbesondere sequentiellen bzw. sukzessiven, Verbinden bzw. Trennen dieser Düsen auf. Entsprechend sind in einer Ausführung Düsen des Trägers, die mit unterschiedlichen Haltebereichen des Trägers kommunizieren, separat steuerbar, insbesondere durch entsprechend separat steuerbare Stellventile.

Mittel zum Erhöhen der elektrostatischen Anziehung derart, dass die Folie wenigstens teilweise von dem ersten Haltebereich des Trägers auf die Oberfläche übergeht, und Mittel zum Erhöhen der elektrostatischen Anziehung derart, dass die Folie wenigstens teilweise von dem einen oder den mehreren weiteren Haltebereichen des Trägers auf die Oberfläche übergeht, weisen in einer Ausführung jeweils eine Spannungssteuerung, insbesondere -regelung, zum Erhöhen einer lokalen elektrischen Spannung zwischen der Folie und der Oberfläche auf.

Mittel zum Erhöhen der pneumatischen Anziehung derart, dass die Folie wenigstens teilweise von dem ersten Haltebereich des Trägers auf die Oberfläche übergeht, und Mittel zum Erhöhen der pneumatischen Anziehung derart, dass die Folie wenigstens teilweise von dem einen oder den mehreren weiteren Haltebereichen des Trägers auf die Oberfläche übergeht, weisen in einer Ausführung jeweils eine Drucksteuerung, insbesondere -regelung, zum Erhöhen eines lokalen Unterdrucks zwischen der Folie und der Oberfläche auf.

In einer Ausführung sind zwei oder mehr der Haltebereiche des Trägers zueinander, insbesondere paarweise, benachbart, insbesondere der erste Haltebereich und ein (erster) weiterer Haltebereich und/oder ein erster weiterer Haltebereich und ein zweiter weiterer Haltebereich. Durch sequentielles Reduzieren des Unterdrucks und/oder Erhöhen der elektrostatischen Anziehung derart, dass in einem vorgelagerten Schritt die Folie wenigstens teilweise von einem dieser Bereiche auf die Oberfläche übergeht, und in einem nachgelagerten Schritt wenigstens teilweise von einem anderen dieser Bereiche auf die Oberfläche übergeht, kann die Folie in einer Ausführung vorteilhaft mit weniger Luftblasen bzw. -einschlüssen auf der Oberfläche angeordnet werden.

In einer Weiterbildung umgeben einer oder mehrere der Haltebereiche des Trägers jeweils einen oder mehrere der Haltebereiche des Trägers, insbesondere konzentrisch. Hierdurch kann in einer Ausführung vorteilhaft die Folie sequentiell bzw. bereichsweise von innen nach außen auf der Oberfläche angeordnet werden. Entsprechend wird in einer Weiterbildung in den Schritten d) und e) der (trägergerichtete) Unterdruck derart reduziert und/oder die Anziehung derart erhöht, dass die Folie zunächst wenigstens teilweise von einem umgebenen Haltebereich des Trägers und anschließend wenigstens teilweise von einem diesen umgebenden Haltebereich des Trägers auf die Oberfläche übergeht. Insbesondere kann also der (trägergerichtete) Unterdruck derart reduziert und/oder die Anziehung derart erhöht werden, dass zunächst die Folie wenigstens teilweise von einem innersten ersten Haltebereich auf die Oberfläche übergeht, anschließend von einem diesen umgebenden (ersten) weiteren Haltebereich und in einer Weiterbildung anschließend von einem diesen wiederum umgebenden (zweiten) weiteren Haltebereich, gegebenenfalls gefolgt von weiteren Haltebereichen.

Nach einem Aspekt der vorliegenden Erfindung sind ein oder mehrere der Haltebereiche des Trägers jeweils durch eine Dichtung begrenzt, insbesondere voneinander abgegrenzt. Hierdurch kann das hier erläuterte sequentielle bereichsweise Übergehen der Folie von dem Träger auf die Oberfläche verbessert, insbesondere die Folie in den Haltebereichen, in denen sie noch nicht übergehen soll, besser gehalten werden.

Nach einem Aspekt der vorliegenden Erfindung sind ein oder mehrere der Haltebereiche des Trägers jeweils, wenigstens im Wesentlichen, kreisförmig. Hierdurch kann in einer Ausführung das hier erläuterte sequentielle bereichsweise Übergehen der Folie von dem Träger auf die Oberfläche konzentrisch von innen nach außen durchgeführt und so insbesondere mit weniger Luftblasen bzw. -einschlüssen durchgeführt werden.

Nach einem Aspekt der vorliegenden Erfindung weist der Träger wenigstens lokal, insbesondere wenigstens einer seiner Haltebereiche, eine geringere Krümmung auf als die Oberfläche. Zusätzlich oder alternativ kann der Träger, insbesondere wenigstens einer seiner Haltebereiche, wenigstens im Wesentlichen eben sein. Hierdurch kann in einer Ausführung das Halten der Folie an dem Träger und/oder dessen Anordnung über der Oberfläche verbessert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Schritt eines Anordnens einer Folie auf einer Oberfläche mittels einer Vorrichtung nach einer Ausführung der vorliegenden Erfindung;
- Fig. 2: einen weiteren Schritt des Anordnens mittels der Vorrichtung;
- Fig. 3: einen weiteren Schritt des Anordnens mittels der Vorrichtung; und
- Fig. 4: einen Schritt eines Anordnens einer Folie auf einer Oberfläche mittels einer Vorrichtung nach einer weiteren Ausführung der vorliegenden Erfindung.

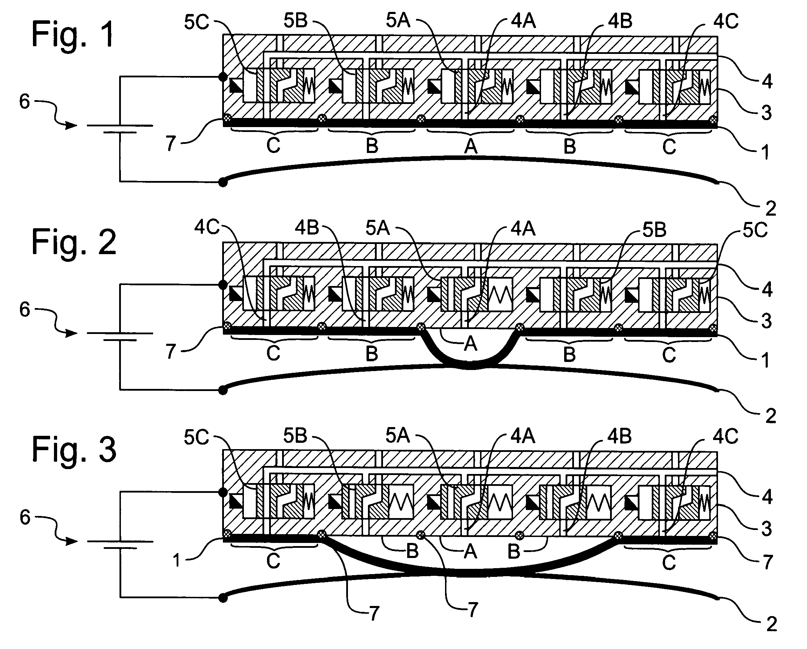

Fig. 1 zeigt eine Lackfolie 1, eine mit der Folie 1 zu beklebende Oberfläche in Form einer Außenfläche 2 eines Karosseriedachs eines im Übrigen nicht dargestellten Personenkraftwagens sowie eine Vorrichtung mit einem Träger 3, Mitteln zum Halten der Folie 1 mittels Unterdruck an einem ersten Haltebereich A des Trägers in Form einer Düse 4A, die über eine Leitung 4 mit einer Unterdruckquelle (nicht dargestellt) verbindbar ist, Mitteln zum Halten der Folie 1 mittels Unterdruck an einem ersten weiteren Haltebereich B des Trägers in Form zweier Düsen 4B, die über die Leitung 4 mit der Unterdruckquelle verbindbar sind, Mitteln zum Halten der Folie 1 mittels Unterdruck an einem zweiten weiteren Haltebereich C des Trägers in Form zweier Düsen 4C, die über die Leitung 4 mit der Unterdruckquelle verbindbar sind, Mitteln zum Reduzieren des die Folie an dem jeweiligen Haltebereich A, B bzw. C haltenden Unterdrucks in Form von separat ansteuerbaren Stellventilen 5A, 5B bzw. 5C und einer diese aktuierenden Steuerung (nicht dargestellt) zum Trennen der Düsen 4A, 4B, 4C von der Unterdruckquelle und zum Verbinden mit Umgebungsdruck, Mitteln zum Anlegen einer elektrostatischen Anziehung zwischen der Folie 1 und der Oberfläche 2 in Form einer Spannungsquelle 6; und Mitteln zum Anordnen des Trägers 3 über der Oberfläche 2 in Form eines Gestells, Roboters oder dergleichen (nicht dargestellt).

Zunächst wird in einem Schritt a) die Folie 1 mittels Unterdruck durch die Düsen 4A-4C an den ersten Haltebereich A, den ersten weiteren Haltebereich B und den zweiten weiteren Haltebereich C des Trägers 3 angesaugt und so daran gehalten.

Die Haltebereiche A, B, und C sind kreisförmig und eben und weisen eine geringere Krümmung auf als die Oberfläche 2. Sie sind jeweils durch eine Dichtung 7 voneinander abgegrenzt. Dabei umgibt der erste weitere Haltebereich B den ersten Haltebereich A konzentrisch, der zweite weitere Haltebereich C wiederum den ersten weiteren Haltebereich B konzentrisch.

Anschließend wird, wie in Fig. 1 dargestellt, in einem Schritt b) der Träger 3 über der Oberfläche 2 von ihr beabstandet angeordnet und durch die Spannungsquelle 6 in einem Schritt c) eine elektrostatische Anziehung zwischen der Folie 1 und der Oberfläche 2 angelegt.

Nun wird, wie in Fig. 2 dargestellt, in einem Schritt d) das Stellventil 5A umgeschaltet, so dass es die Düse 4A von der Leitung 4 bzw. der Unterdruckquelle trennt und mit Umgebungsdruck verbindet. Hierdurch wird in dem ersten Haltebereich A der Unterdruck bzw. die Druckdifferenz zum Umgebungsdruck auf Null reduziert, so dass die Folie 1 von dem ersten Haltebereich A des Trägers auf die Oberfläche 2 übergeht und mit dieser verklebt.

Anschließend werden, wie in Fig. 3 dargestellt, in einem Schritt e) die Stellventile 5B umgeschaltet, so dass sie die Düsen 4B von der Leitung 4 bzw. der Unterdruckquelle trennen und mit Umgebungsdruck verbinden. Hierdurch wird in dem ersten weiteren Haltebereich B der Unterdruck bzw. die Druckdifferenz zum Umgebungsdruck auf Null reduziert, so dass die Folie 1 nun auch von dem ersten weiteren Haltebereich B des Trägers auf die Oberfläche 2 übergeht und mit dieser verklebt.

Schließlich werden in einem zweiten Schritt e) die Stellventile 5C umgeschaltet, so dass sie die Düsen 4C von der Leitung 4 bzw. der Unterdruckquelle trennen und mit Umgebungsdruck verbinden. Hierdurch wird in dem zweiten weiteren Haltebereich C der Unterdruck bzw. die Druckdifferenz zum Umgebungsdruck auf Null reduziert, so dass die Folie 1 nun auch von dem zweiten weiteren Haltebereich C des Trägers auf die Oberfläche 2 übergeht und mit dieser verklebt.

Auf diese Weise wird der Unterdruck, wie durch die Figurenfolge Fig. 1 → Fig. 2 → Fig. 3 angedeutet, sequentiell bzw. sukzessive bereichsweise derart reduziert, dass zunächst die Folie 1 von dem innersten ersten Haltebereich A auf die Oberfläche 2 übergeht, anschließend von dem diesen konzentrisch umgebenden ersten weiteren Haltebereich B und anschließend von einem diesen wiederum konzentrisch umgebenden zweiten weiteren Haltebereich C.

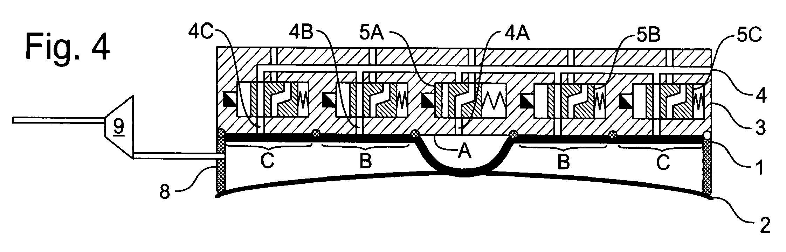

Fig. 4 zeigt in Fig. 2 entsprechender Weise einen Schritt eines Anordnens einer Folie auf einer Oberfläche mittels einer Vorrichtung nach einer weiteren Ausführung der vorliegenden Erfindung. Einander entsprechende Merkmale sind durch identischen Bezugszeichen identifiziert, so dass auf die vorstehende Beschreibung Bezug genommen und nachfolgend nur auf Unterschiede eingegangen wird.

In dieser weiteren Ausführung wird in einem Schritt c) eine pneumatische Anziehung zwischen der Folie 1 und der Oberfläche 2 angelegt. Hierzu wird ein Raum zwischen der Folie 1 bzw. dem Träger 3 und der Oberfläche 2 durch eine Manschette 8 abgedichtet und darin ein oberflächengerichteter Unterdruck zwischen der Folie 1 und der Oberfläche 2 erzeugt, im Ausführungsbeispiel mittels einer Unterdruck- bzw. Vakuumpumpe 9.

Dann wird, wie vorstehend mit Bezug auf Fig. 1 bis 3 beschrieben, durch sukzessives Umschalten der Stellventile 5A, 5B, 5C der trägergerichtete Unterdruck, der die Folie 1 an dem Träger 3 hält reduziert, so dass die Folie 1 sukzessive von dem Träger 3 auf die Oberfläche 2 übergeht. Zusätzlich oder alternativ kann der oberflächengerichtete Unterdruck in analoger Weise erhöht werden, beispielsweise durch entsprechendes Ansteuern der Pumpe 9.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

**Bezugszeichenliste**

| | |
|---|---|
| 1 | (Lack)Folie |
| 2 | Karosseriedachaußenfläche (Oberfläche) |
| 3 | Träger |
| 4A, 4B, 4C | Düse |
| 4 | Leitung |
| 5A, 5B, 5C | Stellventil |
| 6 | Spannungsquelle |
| 7 | Dichtung |
| 8 | Manschette |
| 9 | Pumpe |
| A | erster Haltebereich |
| B | erster weiterer Haltebereich |
| C | zweiter weiterer Haltebereich |

## Patentansprüche

1. Verfahren zum, insbesondere stoffschlüssigen, Anordnen einer Folie (1) auf einer Oberfläche (2), insbesondere eines Kraftfahrzeugs, insbesondere einer Außenfläche einer Karosserie des Kraftfahrzeugs, mit den Schritten:
a) Halten der Folie (1) mittels Unterdruck an einem ersten Haltebereich (A) eines Trägers (3);
b) Anordnen des Trägers (3) über der Oberfläche (2);
c) Anlegen einer elektrostatischen und/oder pneumatischen Anziehung zwischen der Folie (1) und der Oberfläche (2); und
d) Reduzieren des Unterdrucks und/oder Erhöhen der Anziehung derart, dass die Folie (1) wenigstens teilweise von dem ersten Haltebereich (A) des Trägers (3) auf die Oberfläche (2) übergeht.

2. Verfahren nach dem vorhergehenden Anspruch, wobei in Schritt a) die Folie (1) mittels Unterdruck an wenigstens einem weiteren Haltebereich (B, C) des Trägers (3) gehalten und in einem Schritt e), welcher Schritt d) zeitlich nachgelagert ist, der Unterdruck derart reduziert und/oder die Anziehung derart erhöht wird, dass die Folie (1) wenigstens teilweise von dem weiteren Haltebereich (B, C) des Trägers (3) auf die Oberfläche (2) übergeht.

3. Verfahren nach dem vorhergehenden Anspruch, wobei wenigstens zwei der Haltebereiche (A, B, C) des Trägers (3) benachbart sind.

4. Verfahren nach dem vorhergehenden Anspruch, wobei wenigstens einer der Haltebereiche (B; C) des Trägers (3) wenigstens einen anderen der Haltebereiche (A; B) des Trägers (3), insbesondere konzentrisch, umgibt.

5. Verfahren nach dem vorhergehenden Anspruch, wobei in den Schritten d) und e) der Unterdruck derart reduziert und/oder die Anziehung derart erhöht wird, dass die Folie (1) zunächst wenigstens teilweise von dem umgebenden Haltebereich (A; B) des Trägers (3) und anschließend wenigstens teilweise von dem umgebenden Haltebereich (B; C) des Trägers (3) auf die Oberfläche (2) übergeht.

6. Verfahren nach einem der vorhergehenden Ansprüche, wobei wenigstens einer der Haltebereiche (A, B, C) des Trägers (2) durch eine Dichtung (7) begrenzt ist.

7. Verfahren nach einem der vorhergehenden Ansprüche, wobei wenigstens einer der Haltebereiche (A, B, C) des Trägers (3) wenigstens im Wesentlichen kreisförmig ist.

8. Verfahren nach einem der vorhergehenden Ansprüche, wobei der Träger (3) wenigstens lokal eine geringere Krümmung aufweist als die Oberfläche (2) und/oder wenigstens im Wesentlichen eben ist.

9. Verfahren nach einem der vorhergehenden Ansprüche, wobei die in Schritt c) angelegte Anziehung wenigstens 10%, insbesondere wenigstens 25%, und/oder höchstens 90%, insbesondere höchstens 75% des Unterdrucks in Schritt a) beträgt.

10. Vorrichtung zum, insbesondere stoffschlüssigen, Anordnen einer Folie (1) auf einer Oberfläche (2), insbesondere eines Kraftfahrzeugs, insbesondere einer Außenfläche einer Karosserie des Kraftfahrzeugs, mit:
einem Träger (3);
Mitteln (4A) zum Halten der Folie (1) mittels Unterdruck an einem ersten Haltebereich (A) des Trägers (3);
Mitteln zum Anordnen des Trägers (3) über der Oberfläche (2);
Mitteln (6; 8, 9) zum Anlegen einer elektrostatischen und/oder pneumatischen Anziehung zwischen der Folie (1) und der Oberfläche (2); und
Mitteln zum Reduzieren des Unterdrucks (5A) und/oder Erhöhen der Anziehung derart, dass die Folie (1) wenigstens teilweise von dem ersten Haltebereich (A) des Trägers (3) auf die Oberfläche (2) übergeht.

11. Vorrichtung nach dem vorhergehenden Anspruch, mit Mitteln (4B, 4C) zum Halten der Folie (1) mittels Unterdruck an wenigstens einem weiteren Haltebereich (B, C) des Trägers (3) und Mitteln zum Reduzieren des Unterdrucks (5B, 5C) und/oder Erhöhen der Anziehung (6; 8, 9) derart, dass die Folie (1) wenigstens teilweise von dem weiteren Haltebereich (B, C) des Trägers (3) auf die Oberfläche (2) übergeht.

12. Vorrichtung nach dem vorhergehenden Anspruch, wobei wenigstens zwei der Haltebereiche (A, B, C) des Trägers (3) benachbart sind, insbesondere wenigstens einer der Haltebereiche (B, C) des Trägers (3) wenigstens einen anderen der Haltebereiche (A; B) des Trägers (3), insbesondere konzentrisch, umgibt.

13. Vorrichtung nach einem der Ansprüche 10 bis 12, wobei wenigstens einer der Haltebereiche (A, B, C) des Trägers (3) durch eine Dichtung (7) begrenzt und/oder wenigstens im Wesentlichen kreisförmig ist.

14. Vorrichtung nach einem der Ansprüche 10 bis 13, wobei der Träger (3) wenigstens lokal eine geringere Krümmung aufweist als die Oberfläche (2) und/oder wenigstens im Wesentlichen eben ist.

15. Vorrichtung nach einem der Ansprüche 10 bis 14, die zur Durchführung eines Verfahrens nach einem der Ansprüche 1 bis 9 eingerichtet ist.
